(19)

Europäisches Patentamt

European Patent Office

Office européen des brevets

(11) **EP 3 676 302 B1**

(12) **EUROPEAN PATENT SPECIFICATION**

(45) Date of publication and mention
of the grant of the patent:
**03.05.2023 Bulletin 2023/18**

(21) Application number: **18758641.7**

(22) Date of filing: **29.08.2018**

(51) International Patent Classification (IPC):
***C08F 6/06*** *(2006.01)*          ***C08F 2/42*** *(2006.01)*
***C08F 297/04*** *(2006.01)*

(52) Cooperative Patent Classification (CPC):
(C-Sets available)
**C08F 297/044; C08F 2/42; C08F 6/06**          (Cont.)

(86) International application number:
**PCT/EP2018/073185**

(87) International publication number:
**WO 2019/043033 (07.03.2019 Gazette 2019/10)**

(54) **PROCESS FOR THE PREPARATION OF LOW HAZE AND COLOR STABLE STYRENIC POLYMERS**

VERFAHREN ZUR HERSTELLUNG VON TRÜBUNGSARMEN UND FARBSTABILEN STYROLPOLYMEREN

PROCÉDÉ DE PRÉPARATION DE POLYMÈRES DE STYRÈNE À FAIBLE TROUBLE ET À COULEUR STABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.08.2017  EP 17188830**

(43) Date of publication of application:
**08.07.2020  Bulletin 2020/28**

(73) Proprietor: **INEOS Styrolution Group GmbH**
**60325 Frankfurt am Main (DE)**

(72) Inventors:
 • **VERSWYVEL, Michiel**
   **2800 Mechelen (BE)**
 • **NIESSNER, Norbert**
   **67159 Friedelsheim (DE)**
 • **MOORS, Rainer**
   **76726 Germersheim (DE)**
 • **KNOLL, Konrad**
   **68199 Mannheim (DE)**
 • **VAN-DEN-BOSSCHE, Bart**
   **2880 Bornem (BE)**
 • **CAMERLINCK, Christof**
   **9940 Sleidinge (BE)**

(74) Representative: **Jacobi, Markus Alexander**
   **Patentanwälte**
   **Isenbruck Bösl Hörschler PartG mbB**
   **Eastsite One**
   **Seckenheimer Landstrasse 4**
   **68163 Mannheim (DE)**

(56) References cited:
   **DE-A1- 10 306 891      DE-A1-102004 011 345**
   **JP-A- S63 264 602      JP-A- 2003 026 723**
   **US-A- 3 801 520        US-A1- 2010 016 530**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 6/06, C08L 53/02**

**Description**

The present invention relates to a process for the preparation of very low haze styrenic polymers, in particular linear or branched styrene-butadiene block-copolymers (SBC).

Salts in transparent polymer materials, synthesized by anionic polymerization (e.g. SBC), can have very undesirable effects on their optical properties (i.e. increased haze & reduced transparency by light scattering). These salts are formed during termination of the polymerization mixture with alcohols as terminating agent (to yield linear polymers) or polyfunctional coupling agents (to yield coupled polymers). Furthermore, salts can be formed during the polymerization reaction when moisture traces seep into the reactor and react with the living chain ends of the polymers. Also salts originating from unintended side-reactions, e.g. reaction of the alkyl lithium initiator with residues from terminating agents from previous batches, can impact the optical properties of the final polymer resin.

After the addition of said terminating or coupling agents, usually salts of said agents with alcoholate groups -OLi will be formed. Usually, as a consequence of the agglomeration of lithium salts formed during the hydrolysis (mainly $Li_2CO_3$ and LiHCOs) to particles with dimensions in the area of the wavelength of the visible light (> 350 nm) scattering will occur and the material will lose (partly) its transparency and gain haze, specifically when significant amounts of lithium initiator are used.

The patent US 3,801,520 deals with a carbon dioxide and water treatment of a coupled lithium initiated polymer, in particular of branched SBC block copolymers, wherein $CO_2$ and $H_2O$ are added prior to contact with phenolic stabilizers and preferably before contact with any stabilizer in order to reduce strongly the discoloration. $CO_2$ and $H_2O$ are added to the polymer solution after addition of the coupling agent and the obtained mixture is subsequently sufficiently agitated to emulsify the carbonized water over the polymer solution. The obtained polymers have an improved lighter color but the haze is still in need of improvement.

JP-A 2002-060414 discloses a method for stabilizing a polymer by neutralizing catalyst residues contained in a polymer solution obtained by polymerizing a vinylaromatic hydrocarbon and a conjugated diene in the presence of an organolithium initiator. The living polymer chains contained in the polymer solution are deactivated by water or alcohol and then a carbon dioxide gas is directly blown into the polymer solution continuously by use of a pipe or a mixing tank.

In order to prevent the formation of wall deposits of insoluble Li salts, such as Li isopropoxide and Li hydroxide, US 2004/0014915 discloses a process for the preparation of linear homo- or block-copolymers of styrene by anionic polymerization of styrene and optionally butadiene in the presence of organo-lithium initiators and subsequent termination of the "living" polymer chains with an n-alkyl glycidyl ether, a dialkylketone or isopropanol. To the obtained polymer solution $CO_2$ (in particular as dry ice) and water are added with subsequent shaking. The final polymer solution is colorless, but - in case of isopropanol - very cloudy.

DE 10 2004 011 345 discloses a process for working up polymer solutions of anionically polymerized linear styrene-butadiene-block copolymers, in the presence of organo-lithium initiators, wherein the polymers are deactivated with a coupling or chain stopper agent, in particular alcohols such as isopropanol, and then the whole work-up of the obtained polymer solution is carried out in a carbonate medium. The formed Li alcoholate comprised in the polymer solution is acidified and hydrolyzed by use of premixed (gaseous) $CO_2$ and water. The manner of addition is not described in detail. The obtained polymers contain significantly lower specks and lower yellowness.

DE 103 06 891 A1 discloses transparent star shaped SBC block copolymers which are prepared by anionic polymerization comprising the steps: charging and polymerization of the monomers and subsequent deactivation of the living polymer chains with a coupling agent; adding water to the obtained polymer solution while stirring; addition of carbon dioxide gas, so adjusting a slightly acidic polymer solution; and then further addition of stabilizers. The block copolymers or colorless, transparent blends thereof with polystyrene can be used for the preparation of shaped articles.

It is one object of the present invention to provide an improved process for the anionic (co)polymerization of vinyl aromatic monomers and, if desired conjugated dienes, in the presence of organo-lithium initiators which results in polymers or block copolymers having a very low haze and good color stability. It is a further object of the invention to provide a continuous impregnation process for the preparation of said polymers.

One aspect of the invention is a process for the preparation of homopolymers or block copolymers of vinyl aromatic monomers by anionic polymerization, comprising the following steps:

(i) polymerization of at least one vinyl aromatic monomer and optionally at least one conjugated diene in an inert non-polar solvent in the presence of an organometal initiator, in particular organolithium initiator, in a reactor, preferably a batch reactor, and subsequent deactivation of the obtained "living" polymer chains with a terminating agent to obtain a polymer solution;
(ii) passing the polymer solution obtained in step (i) through a first filter;
(iii) feeding the polymer solution obtained in step (ii) to a dispersing device to which water is added in a continuous or in a discontinuous mode;
(iv) feeding the polymer solution obtained in step (iii) to a buffer vessel;

(v) feeding the continuously withdrawn polymer solution from the buffer vessel into a static mixer for impregnation by addition of further water, carbon dioxide and one or more stabilizers; wherein subsequent to step (iv), the process is conducted in a continuous mode;

in step (ii):

- no water is present in the first filter;
- the first filter, preferably a bagfilter, has a mesh size of 200 to 1500 $\mu$m;
- the flow rate of the polymer solution is 10 to 500 $m^3$/h at a temperature of from 50 to 130°C;

in step (iii):

- the dispersion device is a second filter, preferably a bagfilter, having a mesh size of 200 to 1500 $\mu$m, a static mixer or a process flow part, in which the characteristic length of the process flowpart, the velocity, the density and the dynamic viscosity of the polymer solution are chosen in such a way that a transitional or turbulent flow characterized by a Reynolds number above 2300 occurs;
- water is added in amounts of 0.01 to 0.50 $l/m^3$ polymer solution, preferably 0.05 to 0.15 $l/m^3$ polymer solution;

in step (v):

- the flow rate of the additional water is more than 0.05 $l/m^3$ polymer solution, preferably more than 0.10 $l/m^3$ polymer solution, and
- the flow rate of the carbon dioxide is more than 5 $l/m^3$ polymer solution, preferred 10 to 20 $l/m^3$ polymer solution, more preferred 14.5 to 17.5 $l/m^3$ polymer solution; and

in steps (iii) and (v), the pH of the water is in the range of from 5 to 7, preferably 6.2 to 6.6.

The invention in particular relates to a process for the preparation of SBC-block copolymers. In the context of the invention the term "polymer solution" refers to a solution comprising the afore-mentioned polymers solved in an inert non-polar solvent to which in steps (iii) and (v) water is added. In this context the term "solution" includes - depending on the amount of water added (in steps(iii) and (v)) - a dispersion of very fine particles of water in said solvent when above the solubility threshold of water in said solvent, or a homogenous mixture of water in said solvent when below the solubility threshold of water in said solvent.

"Living" polymer chains means the growing polymer chains formed during the anionic polymerization. In the context of the invention the term "dispersing" means to distribute or to spread over a wide area. In the context of the invention the "Reynolds Number" characterizing a flow is defined as follows:

$$Re = (\rho\ u^2) / (\mu\ u / L) = \rho\ u\ L / \mu$$

where

Re = Reynolds Number (non-dimensional)

$\rho$ = density (kg/$m^3$, $lb_m$/$ft^3$ )

u = velocity based on the actual cross section area of the process tube (m/s, ft/s)

$\mu$ = dynamic viscosity (Ns/$m^2$, $lb_m$/s ft)

L = characteristic length (m, ft)

For a tube or pipe the characteristic length is the hydraulic diameter ($d_h$ = hydraulic diameter (m, ft)), d.h. L = $d_h$.
The term "process flow part" means common process flow parts suitable for a transitional or turbulent flow characterized by a Reynolds number above 2300. Such a flow can occur in vessels, between plates, any kind of tubes or pipes (square tubes, circular tubes etc.). Often the process flow part is a tube or pipe, more often a circular tube or pipe.
The dynamic viscosity is determined according to DIN EN ISO 3104:1999-12 at a temperature of from 60 to 80 °C.
A "transitional or turbulent flow" is a flow characterized by a Reynolds number of Re > 2300. A "transitional flow" is in particular defined as a flow characterized by a Reynolds number of 2300 < Re < 4000. A "turbulent flow" is in particular defined as a flow characterized by a Reynolds number of Re > 4000.

The Haze is determined according to ASTM D 1003 on injection molded plates of 4 mm thickness. "Very low Haze" means a haze of less than 5%, preferably less than 2.5%, more preferred less than 2.0%.

The first filter used in step (ii) of the inventive process allows holding away the unwanted salts and crosslinked polymer, formed in the reactor, from the final transparent polymer resin. Preferably a filter is used as dispersing device in step (iii) of the inventive process which allows that during the addition of water the polymer solution is only gently moved, so that very fine particles of water are formed and a heavy dispersion of water in the polymer matrix is prevented.

Further preferably, a process flow part is used as dispersing device in step (iii) of the inventive process, in which the process flow part dimensions, the flow rate and the viscosity of the polymer solution are chosen in such a way that preferably a transitional flow occurs, i.e. a flow characterized by a Reynolds number between 2300 and 4000, which allows that during the addition of water the polymer solution is only gently moved, so that very fine particles of water are formed and a heavy dispersion of water in the polymer matrix is prevented.

The use of a buffer vessel in step (iv) allows running of the impregnation step (v) in a continuous mode by feeding a constant polymer solution stream. Preferably in step (i) a discontinuous batch reactor is used for feeding the buffer vessel. Absence of said buffer vessel would require running of the impregnation step (v) also in a discontinuous way. A continuous impregnation is more preferred as a stable run rate can be obtained and consequently, more exact concentrations of the added components.

A repeated restart of the impregnation step (v) during each hold-up of the reaction would sacrifice on accuracy.

In addition, the use of a second buffer vessel in optional step (vi) after the impregnation step (v) ensures the continuous mode of the impregnation process in case failures in the optional solvent removal and optional subsequent pelletization process would occur and need to be idled for a (short) time interval.

It was surprisingly found that the haze of homopolymers or blockcopolymers of vinyl aromatic monomers, such as styrene, obtained by the process according to the invention is extremely low.

The polymers which can be obtained by the inventive process are homopolymers or block copolymers (such as SBC) made from at least one vinyl aromatic monomer which in step (i) of the inventive process are polymerized by a conventional organo-lithium initiatior and thereafter treated with a terminating or coupling agent to give a linear or star shaped polymer. Preferably the polymers are blockcopolymers made from at least one vinyl aromatic monomer, in particular styrene or functionalized styrene derivatives, and at least one conjugated diene, in particular 1,3-butadiene or isoprene.

The anionic polymerization of vinyl aromatic monomers, in particular styrene or functionalized styrene derivatives, and the copolymerization of vinyl aromatic monomers and conjugated dienes, in particular butadiene or isoprene, to produce block copolymers are well known. Block copolymers consist of a plurality of polymer blocks, e.g. polystyrene, polybutadiene and butadiene/styrene copolymer blocks. The latter can be random copolymer blocks or e.g. tapered copolymer blocks, where initially a polybutadiene sequence forms into which more and more styrene is incorporated as the polymerization progresses, so that eventually a polystyrene sequence is formed. In each case, a metal atom, in particular a lithium atom, is present at the chain end which must be terminated.

The anionic polymerization according to step (i) of the inventive process is generally carried out in inert non-polar organic solvents such as aliphatic or cycloaliphatic hydrocarbons, preferably cyclohexane. Initiators to initiate the anionic polymerization are conventional organometal compounds, preferably organolithium compounds, in particular alkyl lithium compounds, more preferably n-butyllithium and/or sec-butyllithium.

The reactor used in step (i) can be a reactor suitable for continuous or batch processes, preferably the reactor is a batch reactor. The batch reactor can be a usual tank reactor commonly used for anionic polymerizations. Preferably the batch reactor is a stirred tank reactor provided with a stirring device. The size or volume of the batch reactor is not critical. Often a batch reactor is used having a volume between 15 to 80 m3.

Preferred polymers are copolymers of a conjugated diene, preferably butadiene or isoprene, and a vinyl substituted aromatic compound, preferably styrene or functionalized styrene derivatives, synthesized by sequential monomer addition according to the aimed block-structure. The content based on vinyl aromatic monomers is generally 50 to 100 wt.-%, preferably 60 to 90 wt.-%, based on the total block copolymer. In addition, conventional polymerization auxiliaries, e.g. monomer randomizers like ethers and potassium alkoxides, can be added during the polymerization.

At the end of the polymerization, monitored by the end of the temperature increase of the polymerization mixture after the addition of the last monomers, a terminating agent is added. The latter could be an alcohol, preferably isopropanol, to yield linear polymers or a coupling agent to yield macromolecules where two or more polymer chains are joined together. A coupling agent is typically a polyfunctional compound having at least three reactive sites such as an epoxydized unsaturated plant oil, preferable epoxydized soybean oil or epoxydized linseed oil. But also other coupling agents, e.g. tetra-alkoxysilanes, are possible.

The final polymer content generally is 10 to 40 wt.-%, preferably 20 to 35 wt.-%. After the addition of said terminating agent, alcoholate groups e.g. -OLi will be formed on the alcohols and/or coupling agents.

The preparation of asymmetrical linear and star-shaped block copolymers with at least two external styrene hard blocks of different block length is described in US 6,593,430 to which disclosure of the polymerization and termination step is referenced.

According to step (ii) of the inventive process, the polymer solution obtained in step (i) is passed through a first filter in which no water is present. This includes that in step (ii) no water is added.

The filter generally has a mesh size of 200 to 1500 $\mu$m. Preferred are filters having a mesh size of 500 to 1000 $\mu$m, in particular 700 to 900 $\mu$m. The inner diameter of the filter is not critical; often filters are used having an inner diameter of from 50 to 100 cm.

Preferably the filter is a bag filter comprising a housing and one or more filter bags, each having a mesh size of 200 to 1500 $\mu$m, preferably 500 to 1000 $\mu$m, more preferred 700 to 900 $\mu$m. The inner diameter of the housing of the bag filter is not critical; often the inner diameter of the housing is 50 to 100 cm, in particular 65 to 85 cm.

The housing of the bag filter usually is - at least mainly - made from stainless steel. Suitable bag filters which can be used in step (ii) are commercially available as MAX-ILINEO MBF from Hayward Filtertechnik GmbH & Co. KG, Germany. These bag filters are available in four sizes for 3, 4, 6, 8 or 12 filter bags of a standard size (diameter: 168 mm, height: 660 mm), bag filters with 8 filter bags are preferred. A particular preferred bag filter is of the type MBF-0802-AB16-150DS-11GEN-M.

When leaving the reactor, preferably when leaving or emptying the batch reactor, the temperature of the polymer solution is generally between 50 to 130°C, preferably 60 to 90°C. When leaving the reactor, preferably when leaving or emptying the batch reactor, the flow rate of the polymer solution in step (ii) is generally in the range of from 10 to 500 m³/h, preferably 50 to 300 m³/h, more preferably 100 to 190 m³/h. Said flow rate can be achieved with one or more pumps between the reactor (preferably a batch reactor) and the first filter.

The flow rate of the polymer solution over the filter area, in particular over the bag filter area, depends on many factors such as the mesh size of the filter or the mesh size of the filter bags, the inner diameter of the filter (or the housing) and the temperature of the polymer solution and is often in the range between 0.005 m³/s and 0.050 m³/s, preferably between 0.010 m³/s and 0.025 m³/s.

In step (iii), the polymer solution obtained in step (ii) is fed to a dispersion device to which water is added in a continuous or in a discontinuous mode.

In case a batch reactor is used in step (i), in step (iii) the water can be added in a discontinuous mode, e.g. in between consecutive discharges of the batch reactor, or in a continuous mode during discharge of the reactor.

In case a continuous reactor is used in step (i), in step (iii) the water can be added in a continuous mode e.g. by a bagfilter with mesh size 200 to 1500 $\mu$m, using a static mixer or a process flow part (e.g. a tube or pipe). In the process flow part the polymer solution has a transitional or turbulent flow characterized by a Reynolds number above 2300.

The dimensions of the process flow part, the flow rate and the viscosity of the polymer solution are chosen in such a way that a transitional or turbulent flow characterized by a Reynolds number above 2300 occurs.

The process flow part, often a tube or pipe, suitable for a transitional flow can have a characteristic length (diameter) of from 0.05 to 5 m, preferably of from 0.1 to 0.5 m, and the polymer solution being transferred therein can have a velocity (= flow rate/cross section area of process tube) of from 1.0 to 10.0 m/s, preferably of from 1.5 to 5 m/s, densities of from 0.75 to 0.9 kg/l, preferably of from 0.75 to 0.8 kg/l, and the dynamic viscosity can be of from 0.01 to 10 Ns/m² at a temperature of from 60 to 80 °C, preferably of from 0.05 to 5 Ns/m² at a temperature of from 60 to 80 °C.

Often the process tube has a characteristic length of from 0.05 to 1.0 m, and the polymer solution has a velocity of from 1.0 to 10.0 m/s, density of from 750 to 900 kg/m³, and a dynamic viscosity of from 0.01 to 10 Ns/m² at a temperature of from 60 to 80 °C.

Furthermore, the process flow part, often a tube or pipe, suitable for a transitional flow can have a characteristic length (diameter) of from 0.05 to 5 m, preferably of from 0.05 to 1 m, more preferably of from 0.1 to 0.5 m, and the polymer solution being transferred therein can have a velocity (= flow rate/cross section area of process tube) of from 1.0 to 10.0 m/s, preferably of from 1.5 to 5 m/s, densities of from 0.75 to 0.9 kg/l, preferably of from 0.75 to 0.8 kg/l, and the dynamic viscosity can be of from 0.01 to 10 Ns/m² at a temperature of from 60 to 95°C, preferably of from 0.05 to 5 Ns/m² at a temperature of from 60 to 95°C.

Preferably the reactor is a batch reactor and the water is added in between consecutive discharges of the batch reactor. The pH of the water used in steps (iii) and (v) is in the range of from 5 to 7, preferably 6.2 to 6.6. Preferably demineralized water is used. Water can be acidified to give water of said pH-range. For the acidification common acids such as carbonic acid can be used.

The dispersion device can be a second filter having a mesh size of 200 to 1500 $\mu$m, a static mixer or a process tube in which its dimensions, the flow rate and the viscosity of the polymer solution are chosen in such a way that transitional or turbulent flow occurs, (Reynolds number above 2300).

Suitable static mixers are preferably such as described in step (v).

Preferably the dispersion device is a second filter or a process tube with a transitional flow characterized by a Reynolds number between 2300 and 4000. The second filter, used in step (iii), can be identical to or can be different from the first filter used in step (ii). For example the mesh size of the filter, in particular the mesh size of the filter bags, or the number of filter bags can be different. The description above for the first filter is also applicable for the second filter. Preferably the second filter is a bagfilter, more preferably the second filter is of the same type as described for the first filter above, and most preferred the second filter is identical to the first filter.

Usually in step (iii), water is added in amounts of 0.01 to 0.5 l/m$^{-3}$ polymer solution, preferably 0.05 to 0.2 l/m$^3$ polymer solution.

In step (iv) of the process according to the invention, the polymer solution is fed to a buffer vessel (= first buffer vessel). The size and type of the buffer vessel is not critical. Any buffer vessel known in the art for these purpose can be used. Often a buffer vessel is used having a volume between 75 to 125 m$^3$.

Subsequent to step (iv) of the process according to the invention, the process is conducted in a continuous mode.

In an optional step - prior to step (v) - the polymer solution can be filtered by a third filter. Suitable filters which can be used are cartridge filters with a mesh size between 50 $\mu$m and 300 $\mu$m, more preferred a mesh size between 100 $\mu$m and 150 $\mu$m. Suitable cartridge filters which can be used prior to step (iv) are commercially available as G78W84HCB (from CUNO MICRO-KLEAN). The filter material is consisting of acryl fiber and phenol resin and has a length of 100 cm.

Such an additional filter allows holding finer particles, not captured by the filter between the reactor and the first buffer vessel, which are formed during the reaction and during hold-up in the buffer vessel in process step (iii). Examples of such particles are metal salts, in particular lithium salts, or crosslinked polymers (gels).

In step (v) of the process according to the invention, which is subsequent to step (iv) or subsequent to the afore-mentioned optional filtering step after step (iv), the polymer solution is continuously withdrawn from the buffer vessel and fed into a static mixer for impregnation by addition, preferably injection, of further water, carbon dioxide and one or more stabilizers, and optionally processing aids and/or further additives.

In step (v) the temperature of the polymer solution is generally between 40 to 100°C, preferably 60 to 90°C, more preferably 70 to 80°C. The flow rate of the polymer solution is not critical and is often from 9 to 15 m$^3$/h.

The flow rate of the water generally is more than 0.05 l/m$^3$ polymer solution, preferably more than 0.10 l/m$^3$ polymer solution. The flow rate of the water is often in the range of from 0.05 to 0.5 l/m$^3$ polymer solution.

The flow rate of the carbon dioxide generally is more than 5 l/m$^3$ polymer solution, preferred 10 to 20 l/m$^3$ polymer solution, more preferred 14.5 to 17.5 l/m$^3$ polymer solution. The pressure of the carbon dioxide (in the feeding tube) during addition, in particular during injection, is generally between 12 and 25 bar, preferably between 15 and 22 bar.

The one or more stabilizers are added, in particular injected, as a solution. Suitable solvents to dissolve the solid stabilizers are nonpolar solvents such as hexane, cyclohexane etc. The concentration of each of the one or more stabilizers in the solvent generally is in the range of from 3.5 to 15 wt.-%, preferably 5 to 12 wt.-%. The flow rate of the stabilizer solution is preferably 1 to 8 l/m$^3$ polymer solution, in particular 3.5 to 4.5 l/m$^3$ polymer solution.

Preferred stabilizers are oxygen radical scavengers such as Irganox® 1010 (BASF, Germany), Songnox® 1010, Irganox 1076, Irganox 565 and blends thereof, carbon radical scavengers such as Sumilizer® GS, Sumilizer GM and blends thereof, and/or secondary stabilizers such as Irgafos® 168. Said stabilizers are commercially available.

Preferably the afore-mentioned components added in step (v) are added by injection, preferably via injection tubes in the process line.

Preferably as a static mixer used in step (v) and/or in step (iii) a Sulzer mixer comprising at least two mixing elements commercially available from Sulzer company, Switzerland is used, in particular a Sulzer mixer of the type SMX® with SMX mixing elements. In order to obtain homogeneous mixing over the entire pipe cross section, the elements are preferably arranged so that they are offset 90° to each other. Preferably a Sulzer mixer with 2 or 3 SMX mixing elements is used. Each mixing element has advantageously a length of from 700 to 1000 mm. The nominal tube diameter of the static mixer is usually between DN50 to DN100, preferred is DN80.

According to one preferred embodiment before entering the first SMX mixing element, water, carbon dioxide and at least one stabilizer, preferably all stabilizers, are added - in particular injected - to the polymer solution, then before entering the second SMX mixing element optionally further (often a secondary) stabilizer and optionally processing aids and/or further additives are added.

According to a further preferred embodiment before entering the first SMX mixing element, water is added - in particular injected - to the polymer solution, then before entering the second SMX mixing element carbon dioxide is added, and at last before entering the third SMX mixing element all stabilizers and optionally processing aids and/or further additives are added.

According to a further preferred embodiment before entering the first SMX mixing element, water and carbon dioxide are added - in particular injected - to the polymer solution, then before entering the second SMX mixing element at least one stabilizer is added, and at last before entering the third SMX mixing element all stabilizers and optionally processing aids and/or further additives are added.

According to a further preferred embodiment before entering the first SMX mixing element, water is added - in particular injected - to the polymer solution, then before entering the second SMX mixing element carbon dioxide and at least one stabilizer are added, and at last before entering the third SMX mixing element optionally further stabilizers and optionally processing aids and/or further additives are added.

According to a further preferred embodiment before entering the first SMX mixing element, water and carbon dioxide are added - in particular injected - to the polymer solution, then before entering the second SMX mixing element all stabilizers and optionally processing aids and/or further additives are added.

According to a further preferred embodiment before entering the first SMX mixing element, water is added - in particular injected - to the polymer solution, then before entering the second SMX mixing element carbon dioxide, all stabilizers and optionally processing aids and/or further additives are added.

In the afore-mentioned embodiments, the addition of a processing aid, in particular of a plasticizer (e.g. mineral oil), is preferred.

Furthermore preferred as static mixer in step (v) and/or in step (iii) is a Kenics® static mixer, preferably a static mixer of type 10 KMS 12 (from Chemineer, Inc.). This static mixer is a one unit mixer with 3 sections, preferably 4 ports, and a total of 12 elements (preferably 4 elements following each component injection nozzle).

According to one preferred embodiment before entering the first section of said static mixer, water is added - in particular injected - to the polymer solution, then before entering the second section carbon dioxide is added, and at last before entering the third section - preferably through different ports at the same position - all stabilizers and optionally processing aids and/or further additives are added,

The ratio of water (= total amount of water added in steps (ii) and (iv)) to carbon dioxide ($H_2O/CO_2$) is preferably on an equal molar basis, but can also vary from 0.5 to 10 mols of water per mol of $CO_2$.

Preferably the carbon dioxide and water (= total amount of water added in steps (ii) and (iv)) are added in approximately the theoretical amount necessary to react with the metal ions, in particular the lithium ions, present in the polymer solution. In case of lithium salts, the salt crystals of $Li_2CO_3$ are smaller compared to $LiHCO_3$ and are causing therefore less haze.

Preferably in step (i) an organolithium compound is used so that lithium ions are present in the polymer solution, but the following ratios are also valid for other metal ions (($M^+$), e.g. alkali metal ions).

The molar ratio of lithium ($Li^+$) to water ($H_2O$) can be 1:10, preferably 1:5, more preferably 1:3, most preferably 1:1.5, and in particular 1:1. The molar ratio of lithium ($Li^+$) to $CO_2$ can be 2:10, preferably 2:5, more preferably 2:3, most preferably 1:0.5. Preferably, stoichiometric amounts of carbon dioxide and water (= total amount of water added in steps (iii) and (v)) based on the lithium ($Li^+$) are used.

Water has a very low solubility in the organic solvent. By the addition of water and water and carbon dioxide according to steps (iii) and (v) of the inventive process, the $H_2O/CO_2$ molecules diffuse slowly into the organic solvent phase and slowly neutralize the alcoholate group (-OLi) without the formation of a plurality of $H_2O/CO_2$ droplets (emulsion) over the whole solution which can accumulate the $Li_2CO_3$ or $LiHCO_3$ salt to create big salt particles.

In step (v) optionally further additives and/or processing aids can be added to the polymer solution. Suitable additives and/or processing aids are in particular antiblocking agents, dyes, fillers, UV absorbers and plasticizers. Preferred is the use of a plasticizer. Suitable plasticizers are homogeneously miscible oil or oil mixture, preferably mineral oil (or white oil) or dioctyl adipate, in particular mineral oil.

If present, the injection flow of the plasticizer, in particular mineral oil, is preferably 0.1 to 30 l/m³ polymer solution, in particular 0.5 to 15 l/m³ polymer solution.

In an optional step (vi) subsequent to step (v) of the process according to the invention the polymer solution obtained in step (v) can be fed to a further buffer vessel (= second buffer vessel). The description for the first buffer vessel above is also valid for the second buffer vessel. This further buffer vessel allows maintaining a continuous process in the impregnation section (step v) in case of problems during the optional blending and hydrogenation steps and/or solvent removal and pelletization process. Preferably step (vi) is comprised in the process according to the invention.

Subsequent to step (v) or subsequent to the afore-mentioned optional step (vi) with a second buffer vessel, the polymer solution obtained by the process according to the invention can be worked up in a usual manner.

Optionally, prior to working up, said polymer solution can be mixed with one or more other compatible thermoplastic polymers (preferably as solution) and/or further additives. Furthermore, prior to working up, optionally said polymer solution can be hydrogenated according to known methods. By use of one or more of said optional procedures - prior to working up - a polymer solution comprising a polymer mixture and/or modified (e.g. hydrogenated) polymers is obtained.

For working up of said polymer solution (optionally mixed and/or modified as hereinbefore described), the polymer solution can be degassed in order to remove the solvent.

The removal of the solvent can be achieved by common methods such as flash devolatilization and/or devolatization under reduced pressure. For the latter, this purpose advantageously a degassing device and/or an extruder, preferably a twin-screw extruder, can be used. Preferably, first a degassing device (devolatizer) and then a degassing extruder are used. During the extrusion further additives and/or processing aids can be added.

In an optional - preferred- step subsequent to the degassing (solvent removal) step, the obtained polymer - in particular the obtained extrudate - can be granulated or pelletized by commonly known methods.

Preferred is a process according to the invention which subsequent to step (v) further comprises feeding of the polymer solution to a second buffer vessel. Furthermore, preferred is a process according to the invention which further comprises subsequent to step (v) or subsequent to feeding of the polymer solution to a second buffer vessel, degassing of the polymer solution. Preferred is the afore-mentioned process which subsequent to the degassing step additionally comprises granulation or pelletizing of the obtained polymer.

The polymers obtained by the inventive process have a very low haze compared to materials produced according to the state of the art. Metal salts, in particular lithium salts (mainly $LiHCO_3$ and $Li_2CO_3$ but also others) contained in the polymers obtained by the inventive process are finely dispersed over the polymer matrix with a particle size of the salt crystals up to 150 nm (= smaller than the wavelength of visible light). In particular preferred are linear or branched styrene-butadiene block-copolymers obtained by the inventive process.

Polymer blends comprising at least one homo- or block copolymer obtained by the inventive process have an improved color stability. Suitable polymers for such a polymer blend are other transparent thermoplastic polymers which are compatible with the homo- or block copolymers obtained according to the inventive process such as other styrene-butadiene block-copolymers (SBC), polystyrene (PS), styrenemethylmethacrylate (SMMA). Polymer blends comprising (or consisting of) at least one SBC obtained by the inventive process and at least one styrene/methyl methacrylatecopolymer (SMMA) are preferred. Said polymer blends can be obtained by conventional methods such as melt mixing of the polymer molding by aid of common devices (e.g. a single or twin screw extruder or a kneading machine).

Shaped articles, in particular such as plastic household articles, such as bowls, bottles, jars, carafes, etc., comprising the homo- or block copolymers obtained by the inventive process or their blends as hereinbefore described -can be produced by conventional methods (extrusion, injection molding etc.) known in the art and have a high transparency, high glass-like brilliance, high impact resistance, color stability and a very low haze.

The invention is further illustrated by the examples and claims.

Examples:

All solvents and monomers used in the following examples were dried to use over aluminum-oxide columns or using a destination process. Unless otherwise stated, the water used in all process steps was demineralized water (pH 6.4).

Example 1 Polymerization of a star shaped SBC-block copolymer (= step (i) of the process according to the invention)

A star-shaped styrene-butadiene block copolymers of the structure

$$
\begin{array}{ll}
1x & S_1\text{-}S_2\text{-}(B/S)_1\text{-}(B/S)_2\text{-}S_3 \\
3.5x & S_2\text{-}(B/S)_1\text{-}(B/S)_2\text{-}S_3
\end{array} \quad X
$$

wherein, $S_1$, $S_2$ and $S_3$ denote different styrene polymer blocks, $(B/S)_1$ and $(B/S)_2$ are different random styrene/butadiene copolymer blocks and X denotes the coupling center derived from the coupling agent, was prepared by sequential anionic polymerization of styrene (monomers S1 to S5) and butadiene (monomers B1 and B2), and subsequent coupling using epoxidized soybean oil.

In a batch reactor (stainless steel reactor, stirred, 50 m$^3$) 21600 l of cyclohexane at 40 °C was used as initial charge (ic) and 2803 l styrene (S1) was added at 20 m$^3$/h. When 280 l of S1 had been dosed, 32.19 l of a 1.4 M sec-butyllithium solution (BuLi 1) for initiation (Ini1) had been dosed at once. The reaction was allowed to proceed under continuous stirring and reflux cooling to complete monomer consumption (identified by a decrease in temperature of the reaction mixture). Next, 77.97 l of a 1.4 M sec-butyllithium (BuLi 2) solution was added, as the second initiator mixture (Ini 2), together wth 13.48 l of a potassium tert-amyl alcoholate (PTA) solution (5.26 wt.-% in cyclohexane) as randomizer under continuous stirring.

In a next step, again 1756 l styrene (S2) was added and the polymerization reaction, under continuous stirring, was allowed to run to complete monomer consumption (identified by a decrease in temperature of the reaction mixture). After complete monomer consumption, the polymerization mixture was cooled by means of reflux cooling to a temperature below 75 °C. Then, 858 l butadiene (B1) and 573 l styrene (S3) were added simultaneously and the polymerization reaction, with continuous stirring, was allowed to run to complete monomer consumption (identified by a decrease in temperature of the reaction mixture). After complete monomer consumption, the polymerization mixture was cooled by means of reflux cooling to a temperature below 60 °C.

In a next step, again 2290 l butadiene (B2) and 754 l styrene (S4) were added simultaneously and the polymerization reaction, with continuous stirring, was allowed to run to complete monomer consumption (identified by a decrease in temperature of the reaction mixture). After complete monomer consumption, the polymerization mixture was cooled by means of reflux cooling to a temperature below 90 °C.

Then, again 214 l styrene (S5) was added and the polymerization reaction, with continuous stirring, was allowed to run to complete monomer consumption (identified by a decrease in temperature of the reaction mixture).

Finally, 10 minutes after the last complete monomer consumption, 17.2 l Efka® PL 5382 (epoxidized soya bean oil, BASF), heated to a temperature of 85°C, as coupling agent was added to the polymer solution and allowed to react for 10 minutes at a temperature of 90°C while stirring.

Table 1 shows the amounts of the components used.

Table 1

| Components | wt.-% (phm) | kg | liter |
|---|---|---|---|
| Styrene I | 34.00% | 2551 | 2803 |
| Styrene II | 21.30% | 1598 | 1756 |
| Styrene III | 6.95% | 521 | 573 |
| Butadiene I | 7.08% | 531 | 857 |
| Styrene IV | 9.15% | 687 | 754 |
| Butadiene II | 18.92% | 1420 | 2290 |
| Styrene V | 2.60% | 195 | 214 |
| Edenol D82 | | 17.1 | 17.2 |
| phm= per hundred parts by weight of monomer' (wt.-% of component (initiator, coupling agent etc.) is calculated on the total mass of the monomers. | | | |

The polymer solution obtained in step (i) was processed according to the following process flow:

BATCH REACTOR (step (i)) -> FILTER (step (ii)) -> DISPERSING DEVICE WITH WATER ADDITION (step (iii)) -> BUFFER VESSEL 1 (step (iv)) -> CARTRIDGE FILTER -> IMPREGNATION (step (v) continuous) [INJECTION OF WATER , $CO_2$ and STABILIZERS -> STATIC MIXER -> INJECTION OF MINERAL OIL -> STATIC MIXER] -> BUFFER VESSEL 2 -> DEVOLATIZER -> DEGASSING EXTRUDER -> PELLETIZER.

One reactor volume was from 31 to 34 m$^3$.

The polymer solution obtained in step (i) was fed through a filter with the below specifications in step (ii):

- MAXI LINE MBF of HAYWARD Filter Technik
- Type: MBF-0802-AB16-150DS-11GEN-M:
- Innerdiameter filter: 778mm
- Filterbags: 8 x diameter 168mm, Height 660mm, mesh size 800 µm
- Flow rate when emptying the reactor: 180 m$^3$/h
- Flow rate over filter bag area: 0.017m/s
- Temperature polymer solution: ~ 89.2 °C.

Afterwards, water was added to the process tube between the filter of step (ii) towards the buffer of step (iv) at a rate of 12 l/h or 0.07 l/m$^3$ polymer solution.

The process tube, with a round cross-section, has an inner diameter of 0.15 m. The density of the polymer solution at that stage is 750 kg/m$^3$ and the dynamic viscosity is 0.08 Pa·s (N·s/m$^2$) at a temperature of 78°C. The polymer solution is being pumped at a rate of 180 m$^3$/h through this process tube (= pipe).

The Reynolds number is calculated as:

$$Re = (\rho\ u^2) / (\mu\ u\ /\ L) = \rho\ u\ L\ /\ \mu = 3978$$

With

Re = Reynolds number
$\rho$ = density
u = velocity based on the actual cross section area of the process tube (m/s)
$\mu$ = dynamic viscosity (Pa·s, N·s/m$^2$)
L = characteristic length (m) = the diameter for a process tube with a round cross section (= pipe)

Then, the polymer solution obtained in step (iii) was fed to a first buffer vessel (100 m$^3$) (= step iv).

Prior to step (v), the polymer solution continuously withdrawn from the first buffer vessel was filtered through a cartridge filter. The filter used was G78W84HCB from CUNO MICRO-KLEAN with a mesh size of 125 $\mu$m. The filter material is consisting of acryl fiber and phenol resin and has a length of 100 cm.

Then, the polymer solution from the buffer vessel in step (iv) of the inventive process, which prior to step (v) was filtered through a cartridge filter, was impregnated (step (v) of the inventive process) under the following conditions (continuous process):

- Continuous flow of the polymer solution: 15 m$^3$/h;
- Temperature of the polymer solution: 70 to 80°C;
- Injection flow water = 0.18 l/m$^3$ polymer solution;
- Injection flow $CO_2$ = 16.32 l/m$^3$ polymer solution;
- Pressure in carbon dioxide feeding tube: 16 to 22 bar;
- Injection flow stabilizers = 4.07 l/m$^3$ polymer solution;
- Injection flow mineral oil = 3.12 l/m$^3$ polymer solution;
- all tubing is DN80, except tubing for $CO_2$ injection (= DN 50).

As stabilizers Irganox® 1010 (BASF SE, Germany), Irgaphos® 168 (BASF SE) and Sumilizer® GS (Sumitomo Corp., Japan) were used as a solution in cyclohexane in the following concentrations: Irganox® 1010 (7 wt.-%), Irgaphos® 168 (10 wt.-%) and Sumilizer® GS (7 wt.-%). As mineral oil WINOG® 70 (medical white oil, H&R (Klaus Dahleke KG)) was used.

As static mixer (step (v)) a Sulzer mixer of the type SMX® with 2 SMX mixing elements arranged in series had been used. Each mixing element had a length of 840 mm and a tube diameter of 80 mm. Before entering the first SMX mixing element water, carbon dioxide and all stabilizers (in solution) were injected to the polymer solution, then before entering of the second SMX mixing element white oil was injected. Then, the polymer solution obtained in step (v) was fed to a second buffer vessel. At last, after feeding the continuously withdrawn polymer solution from the second buffer vessel to a degassing device for degassing, the obtained polymer was fed into a twin-screw extruder for degassing extrusion under vacuum and under water pelletization. The obtained block copolymer had a Melt Flow Index (MFI, determined according to ISO 1133-1-2011 at 200°C and a load of 5 kg) of 13.5 cm$^3$/10 min.

Comparative Example 1

Example 1 was repeated, except that no water was added in step (iii) of the process. The water was added only in the impregnation step (iv). As such, the process flow of the polymer solution obtained in step (i) was: BATCH REACTOR (step (i)) -> FILTER (step (ii)) -> BUFFER VESSEL 1 (step (iv)) -> CARTRIDGE FILTER -> IMPREGNATION (step (v) continuous) [INJECTION OF WATER , $CO_2$ and STABILIZERS -> STATIC MIXER ->INJECTION OF MINERAL OIL -> STATIC MIXER] -> BUFFER VESSEL 2 -> DEVOLATIZER -> DEGASSING EXTRUDER -> PELLETIZER.

The obtained block copolymer had a Melt Flow Index (MFI, determined according to ISO 1133-1-2011 at 200°C and a load of 5 kg) of 13.5 cm$^3$/10 min.

Comparative Example 2

Step (i) of Example 1 was repeated. Before emptying the batch reactor with the polymer solution obtained in step (i), ~ 2.7 l of water (20 l/h during 8.1 min) were added to the filter used in step (ii) (using the same type of filter and throughput as described for example 1) and afterwards pumped towards a buffer vessel (step (iv)).

As such, the process flow of the polymer solution obtained in step (i) was: BATCH REACTOR (step (i)) -> FILTER WITH WATER ADDITION -> BUFFER VESSEL 1 (step (iv)) -> CARTRIDGE FILTER -> IMPREGNATION (step (v) continuous) [INJECTION OF WATER , $CO_2$ and STABILIZERS -> STATIC MIXER ->INJECTION OF MINERAL OIL -> STATIC MIXER] -> BUFFER VESSEL 2 -> DEVOLATIZER -> DEGASSING EXTRUDER-> PELLETIZER.

The subsequent work-up from the first buffer vessel, through the impregnation towards the degassing and pelletization was the same as described in Example 1. The same amount and type of water, $CO_2$, stabilizers and mineral oil and under the same processing conditions was added during the impregnation step (v) as described for Example 1.

Two hours after production, samples (injection molded plates, thickness 4 mm) of the obtained SBC-polymer pellets of Example 1 and Comparative Example 1 were used for color measurements (see Table 2) according to DIN 5033 and DIN 6174 (CIE LAB). For the measurements a LUCI 100 spectrophotometer (light source: Xenon lamp D65, D65 =T = 6504 K, measurement geometry: D/8°) has been used. The haze was measured on injection molded plates (thickness 4 mm) of the obtained polymer pellets of Example 1, Comparative Example 1 and Comparative Example 2 using a BYK-Gardner Haze-gard.

The obtained block copolymer had a Melt Flow Index (MFI, determined according to ISO 1133-1-2011 at 200°C and a load of 5 kg) of 13.5 cm$^3$/10 min.

Table 2:

|  | Example 1 | Comp. Example 1 | Comp. example 2 |
|---|---|---|---|
| YI | 5.93 | 9.66 | 6.3 |
| L-value | 94.89 | 93.97 | 94.67 |
| a-value | -0.27 | 0.04 | -0.21 |
| b-value | 3.23 | 5.06 | 3.37 |
| Haze | 1.4 | 1.2 | 1.7 |
| YI = Yellowness index | | | |

Samples according to Example 1 have a better color stability compared to Comparative Example 1 (the higher the b-value and the higher the YI, the more yellow) and a better color stability and haze compared to Comparative example 2. The results clearly show that the sequence of a filter (step (ii)) and the addition of water in a dispersing device (step (iii)) is beneficial.

**Claims**

1.   Process for the preparation of homopolymers or block copolymers of vinyl aromatic monomers by anionic polymerization comprising the following steps:

(i) polymerization of at least one vinyl aromatic monomer and optionally at least one conjugated diene in an inert non-polar solvent in the presence of an organometal initiator, in particular organolithium initiator, in a reactor, preferably a batch reactor, and subsequent deactivation of the obtained "living" polymer chains with a terminating agent to obtain a polymer solution;
(ii) passing the polymer solution obtained in step (i) through a first filter;
(iii) feeding the polymer solution obtained in step (ii) to a dispersing device to which water is added in a continuous or in a discontinuous mode;
(iv) feeding the polymer solution obtained in step (iii) to a buffer vessel;
(v) feeding the continuously withdrawn polymer solution from the buffer vessel into a static mixer for impregnation by addition of further water, carbon dioxide and one or more stabilizers; wherein subsequent to step (iv), the process is conducted in a continuous mode;

in step (ii):

• no water is present in the first filter;
• the first filter, preferably a bagfilter, has a mesh size of 200 to 1500 $\mu$m;
• the flow rate of the polymer solution is 10 to 500 m$^3$/h at a temperature of from 50 to 130°C;

in step (iii):

• the dispersion device is a second filter, preferably a bagfilter, having a mesh size of 200 to 1500 $\mu$m, a static mixer or a process flow part in which the characteristic length of the process flow part, the velocity, the density and the dynamic viscosity of the polymer solution are chosen in such a way that a transitional or turbulent flow with a Reynolds number above 2300 occurs;
• water is added in amounts of 0.01 to 0.50 l/m$^3$ polymer solution;

in step (v):

• the flow rate of the additional water is more than 0.05 l/m$^3$ polymer solution, preferably more than 0.10 l/m$^3$ polymer solution, and
• the flow rate of the carbon dioxide is more than 5 l/m$^3$ polymer solution, preferred 10 to 20 l/m$^3$ polymer

solution, more preferred 14.5 to 17.5 l/m$^3$ polymer solution; and

in steps (iii) and (v), the pH of the water is in the range of from 5 to 7, preferably 6.2 to 6.6.

2. Process according to claim 1, wherein the reactor is a batch reactor.

3. Process according to claim 1 or 2, wherein in step (iii), the dispersing device is a filter.

4. Process according to claim 1, wherein in step (iii), the dispersing device is a process flow part, specifically a tube or pipe, in which the polymer solution has a transitional flow with a Reynolds number between 2300 and 4000.

5. Process according to any of claim 1, 2 or 4, wherein in step (iii) the dispersing device is a process tube having a characteristic length of from 0.05 to 1.0 m, and the polymer solution has a velocity of from 1.0 to 10.0 m/s, density of from 750 to 900 kg/m$^3$, and a dynamic viscosity of from 0.01 to 10 Ns/m$^2$ at a temperature of from 60 to 80 °C.

6. Process according to any of claim 1, 2 or 4, wherein in step (iii) the dispersing device is a process tube having a characteristic length of from 0.05 to 5 m, and the polymer solution has a velocity of from 1.0 to 10.0 m/s, density of from 750 to 900 kg/m$^3$, and a dynamic viscosity of from 0.01 to 10 Ns/m$^2$ at a temperature of from 60 to 95°C.

7. Process according to any of claims 1 to 6, wherein in steps (ii) and (iii), the filter is a bagfilter.

8. Process according to any of claims 1 to 7, wherein in step (ii), the mesh size of the filter is 500 to 1000 $\mu$m, in particular 700 to 900 $\mu$m.

9. Process according to any of claims 1 to 8, wherein in step (iii), the water is added in amounts of 0.05 to 0.20 l/m$^3$ polymer solution, more preferably 0.05 to 0.15 l/m$^3$ polymer solution.

10. Process according to any of claims 1 to 9, wherein the polymer solution obtained in step (v) is fed to a further buffer vessel.

11. Process according to any of claims 1 to 10, wherein prior to step (v) - the polymer solution continuously withdrawn from the buffer vessel is filtered by a third filter.

12. Process according to claim 11, wherein the third filter is a cartridge filter with a mesh size between 50 $\mu$m and 300 $\mu$m, preferably between 100 $\mu$m and 150 $\mu$m.

13. Process according to any of claims 1 to 12, wherein in step (v), the stabilizers are added as a solution with a flow rate of 1 to 8 l/m$^3$ polymer solution, in particular 3.5 to 4.5 l/m$^3$ polymer solution.

14. Process according to any of claims 1 to 13, wherein in step (v) the stabilizers are dissolved in a nonpolar solvent where the concentration of each of the one or more stabilizers is in the range of from 3.5 to 15 wt.-%, preferably 5 to 12 wt.-%.

15. Process according to any of claims 1 to 14, wherein in step (v), a plasticizer, preferably mineral oil, is added with an injection flow of 0.1 to 30 l/m$^3$ polymer solution, in particular 0.5 to 15 l/m$^3$ polymer solution.


**Patentansprüche**

1. Verfahren zur Herstellung von Homopolymeren oder Blockcopolymeren aus vinylaromatischen Monomeren durch anionische Polymerisation, umfassend die folgenden Schritte:

   (i) Polymerisation mindestens eines vinylaromatischen Monomers und gegebenenfalls mindestens eines konjugierten Diens in einem inerten, unpolaren Lösungsmittel in Gegenwart eines metallorganischen Initiators, insbesondere eines Organolithium-Initiators, in einem Reaktor, vorzugsweise einem Batch-Reaktor, und anschließende Deaktivierung der erhaltenen "lebenden" Polymerketten mit einem Abbruchmittel, um eine Polymerlösung zu erhalten;
   (ii) Durchleiten der in Schritt (i) erhaltenen Polymerlösung durch einen ersten Filter;

(iii) Zuführen der in Schritt (ii) erhaltenen Polymerlösung zu einer Dispergiervorrichtung, der Wasser kontinuierlich oder diskontinuierlich zugesetzt wird;

(iv) Zuführen der in Schritt (iii) erhaltenen Polymerlösung in ein Puffergefäß;

(v) Zuführen der kontinuierlich abgezogenen Polymerlösung aus dem Puffergefäß in einen statischen Mischer zur Imprägnierung durch Zugabe von weiterem Wasser, Kohlendioxid und einem oder mehreren Stabilisatoren; wobei

im Anschluss an Schritt (iv) das Verfahren in einem kontinuierlichen Modus durchgeführt wird;

in Schritt (ii):

- kein Wasser in dem ersten Filter vorhanden ist;
- der erste Filter, vorzugsweise ein Beutelfilter, eine Maschenweite von 200 bis 1500 $\mu$m hat;
- die Durchflussrate der Polymerlösung 10 bis 500 m$^3$/h bei einer Temperatur von 50 bis 130°C beträgt;

in Schritt (iii):

- die Dispergiervorrichtung ein zweiter Filter, vorzugsweise ein Beutelfilter, mit einer Maschenweite von 200 bis 1500 $\mu$m, ein statischer Mischer oder ein von einem Prozessstrom durchströmtes Teil ist, bei dem die charakteristische Länge des von einem Prozessstrom durchströmten Teils, die Geschwindigkeit, die Dichte und die dynamische Viskosität der Polymerlösung so gewählt werden, dass eine Strömung im Übergangsbereich oder eine Turbulenzströmung mit einer Reynoldszahl über 2300 auftritt;
- Wasser in Mengen von 0,01 bis 0,50 l/m$^3$ Polymerlösung zugegeben wird;

in Schritt (v):

- die Durchflussrate des zusätzlichen Wassers mehr als 0,05 l/m$^3$ Polymerlösung, vorzugsweise mehr als 0,10 l/m$^3$ Polymerlösung, beträgt, und
- die Durchflussrate des Kohlendioxids mehr als 5 l/m$^3$ Polymerlösung, vorzugsweise 10 bis 20 l/m$^3$ Polymerlösung, mehr bevorzugt 14,5 bis 17,5 l/m$^3$ Polymerlösung beträgt; und

in den Schritten (iii) und (v) der pH-Wert des Wassers im Bereich von 5 bis 7, vorzugsweise 6,2 bis 6,6, liegt.

2. Verfahren nach Anspruch 1, wobei der Reaktor ein Batch-Reaktor ist.

3. Verfahren nach Anspruch 1 oder 2, wobei in Schritt (iii) die Dispergiervorrichtung ein Filter ist.

4. Verfahren nach Anspruch 1, wobei in Schritt (iii) die Dispergiervorrichtung ein von einem Prozessstrom durchströmtes Teil, insbesondere ein Rohr oder eine Leitung, ist, in dem die Polymerlösung eine Strömung im Übergangsbereich mit einer Reynoldszahl zwischen 2300 und 4000 aufweist.

5. Verfahren nach einem der Ansprüche 1, 2 oder 4, wobei in Schritt (iii) die Dispergiervorrichtung ein Prozessrohr mit einer charakteristischen Länge von 0,05 bis 1,0 m ist, und die Polymerlösung eine Geschwindigkeit von 1,0 bis 10,0 m/s, eine Dichte von 750 bis 900 kg/m$^3$ und eine dynamische Viskosität von 0,01 bis 10 Ns/m$^2$ bei einer Temperatur von 60 bis 80°C hat.

6. Verfahren nach einem der Ansprüche 1, 2 oder 4, wobei in Schritt (iii) die Dispergiervorrichtung ein Prozessrohr mit einer charakteristischen Länge von 0,05 bis 5 m ist, und die Polymerlösung eine Geschwindigkeit von 1,0 bis 10,0 m/s, eine Dichte von 750 bis 900 kg/m$^3$ und eine dynamische Viskosität von 0,01 bis 10 Ns/m$^2$ bei einer Temperatur von 60 bis 95°C hat.

7. Verfahren nach einem der Ansprüche 1 bis 6, wobei in den Schritten (ii) und (iii) der Filter ein Beutelfilter ist.

8. Verfahren nach einem der Ansprüche 1 bis 7, wobei in Schritt (ii) die Maschenweite des Filters 500 bis 1000 $\mu$m, insbesondere 700 bis 900 $\mu$m, beträgt.

9. Verfahren nach einem der Ansprüche 1 bis 8, wobei in Schritt (iii) das Wasser in Mengen von 0,05 bis 0,20 l/m$^3$ Polymerlösung, mehr bevorzugt 0,05 bis 0,15 l/m$^3$ Polymerlösung, zugegeben wird.

**10.** Verfahren nach einem der Ansprüche 1 bis 9, wobei die in Schritt (v) erhaltene Polymerlösung einem weiteren Pufferbehälter zugeführt wird.

**11.** Verfahren nach einem der Ansprüche 1 bis 10, wobei vor Schritt (v) - die kontinuierlich aus dem Puffergefäß abgezogene Polymerlösung durch einen dritten Filter filtriert wird.

**12.** Verfahren nach Anspruch 11, wobei der dritte Filter eine Filterpatrone mit einer Maschenweite zwischen 50 $\mu$m und 300 $\mu$m, vorzugsweise zwischen 100 $\mu$m und 150 $\mu$m, ist.

**13.** Verfahren nach einem der Ansprüche 1 bis 12, wobei in Schritt (v) die Stabilisatoren als Lösung mit einer Durchflussrate von 1 bis 8 l/m$^3$ Polymerlösung, insbesondere 3,5 bis 4,5 l/m$^3$ Polymerlösung, zugegeben werden.

**14.** Verfahren nach einem der Ansprüche 1 bis 13, wobei in Schritt (v) die Stabilisatoren in einem unpolaren Lösungsmittel gelöst werden, wobei die Konzentration jedes der einen oder mehreren Stabilisatoren im Bereich von 3,5 bis 15 Gew.-%, vorzugsweise 5 bis 12 Gew.-%, liegt.

**15.** Verfahren nach einem der Ansprüche 1 bis 14, wobei in Schritt (v) ein Weichmacher, vorzugsweise Mineralöl, mit einem Injektionsstrom von 0,1 bis 30 l/m$^3$ Polymerlösung, insbesondere 0,5 bis 15 l/m$^3$ Polymerlösung, zugegeben wird.

**Revendications**

**1.** Procédé de préparation d'homopolymères ou de copolymères blocs de monomères vinylaromatiques par polymérisation anionique comprenant les étapes suivantes :

(i) polymérisation d'au moins un monomère vinylaromatique et éventuellement d'au moins un diène conjugué dans un solvant non polaire inerte en présence d'un initiateur organométallique, en particulier un initiateur organolithium, dans un réacteur, de préférence un réacteur discontinu, et désactivation subséquente des chaînes polymères «vivantes» obtenue par un agent de terminaison pour obtenir une solution de polymère,
(ii) faire passer la solution de polymère obtenue à l'étape (i) à travers un premier filtre,
(iii) introduire la solution de polymère obtenue à l'étape (ii) dans un dispositif de dispersion auquel est ajoutée, en mode continu ou en mode discontinu, de l'eau;
(iv) introduire la solution de polymère obtenue à l'étape (iii) dans un récipient tampon ;
(v) introduire la solution de polymère extraite en continu du récipient tampon dans un mélangeur statique pour imprégnation par addition d'eau supplémentaire, de dioxyde de carbone et d'un ou plusieurs stabilisants; dans lequel, après l'étape (iv), le procédé est conduit en mode continu ;

à l'étape (ii) :

• aucune eau n'est présente dans le premier filtre ;
• le premier filtre, de préférence un filtre à sacs, présente un maillage de 200 à 1500 $\mu$m;
• le débit de la solution de polymère est de 10 à 500 m$^3$/h à une température de 50 à 130° C ;

à l'étape (iii) :

• le dispositif de dispersion est un deuxième filtre, de préférence un filtre à sacs, présentant un maillage de 200 à 1500 $\mu$m, un mélangeur statique ou une partie du flux du procédé dans lequel la longueur caractéristique de la partie du flux du procédé, la vitesse, la masse volumique et la viscosité dynamique de la solution de polymère sont choisis de manière à ce que se produise un écoulement transitoire ou turbulent dont le nombre de Reynolds est supérieur à 2300
• de l'eau est ajoutée en quantités de 0,01 à 0,50 $\ell$/m$^3$ de solution de polymère,

à l'étape (v) :

• le débit de l'eau supplémentaire est supérieur à 0,05 $\ell$/m$^3$ de solution de polymère, de préférence supérieur à 0,10 $\ell$/m$^3$ de solution de polymère, et
• le débit du dioxyde de carbone est supérieur à 5 $\ell$/m$^3$ de solution de polymère, de préférence de 10

à 20 $\ell$/m$^3$ de solution de polymère, mieux encore de 14,5 à 17,5 $\ell$/m$^3$ de solution de polymère ;

et dans les étapes (iii) et (v), le pH de l'eau est dans la plage de 5 à 7, de préférence de 6,2 à 6,6.

2. Procédé selon la revendication 1, dans lequel le réacteur est un réacteur discontinu.

3. Procédé selon la revendication 1 ou 2, dans lequel à l'étape (iii), le dispositif de dispersion est un filtre.

4. Procédé selon la revendication 1, dans lequel à l'étape (iii), le dispositif de dispersion est une partie du flux du procédé, plus précisément un tube ou une conduite, dans lequel la solution de polymère a un écoulement transitoire dont le nombre de Reynolds est compris entre 2300 et 4000.

5. Procédé selon l'une quelconque des revendications 1, 2 ou 4, dans lequel à l'étape (iii) le dispositif de dispersion est un tube de traitement ayant une longueur caractéristique de 0,05 à 1,0 m, et la solution de polymère a une vitesse de 1,0 à 10,0 m/s, une masse volumique de 750 à 900 kg/m$^3$ et une viscosité dynamique de 0,01 à 10 Ns/m$^2$ à une température de 60 à 80°C.

6. Procédé selon l'une quelconque des revendications 1, 2 ou 4, dans lequel à l'étape (iii) le dispositif de dispersion est un tube de traitement ayant une longueur caractéristique de 0,05 à 5 m, et la solution de polymère a une vitesse de 1,0 à 10,0 m/s, une masse volumique de 750 à 900 kg/m$^3$ et une viscosité dynamique de 0,01 à 10 Ns/m$^2$ à une température de 60 à 95°C.

7. Procédé selon l'une quelconque des revendications 1 à 6, dans lequel aux étapes (ii) et (iii), le filtre est un filtre à sacs.

8. Procédé selon l'une quelconque des revendications 1 à 7, dans lequel à l'étape (ii), le maillage du filtre est de 500 à 1000 $\mu$m, notamment de 700 à 900 $\mu$m.

9. Procédé selon l'une quelconque des revendications 1 à 8, dans lequel à l'étape (iii), l'eau est ajoutée en quantités de 0,05 à 0,20 $\ell$/m$^3$ de solution de polymère, plus préférablement de 0,05 à 0,15 $\ell$/m$^3$ de solution de polymère.

10. Procédé selon l'une quelconque des revendications 1 à 9, dans lequel la solution de polymère obtenue à l'étape (v) est introduite dans un autre récipient tampon.

11. Procédé selon l'une quelconque des revendications 1 à 10, dans lequel préalablement à l'étape (v) - la solution de polymère soutirée en continu de la cuve tampon est filtrée par un troisième filtre.

12. Procédé selon la revendication 11, dans lequel le troisième filtre est un filtre à cartouche dont le maillage est compris entre 50 $\mu$m et 300 $\mu$m, de préférence entre 100 $\mu$m et 150 $\mu$m.

13. Procédé selon l'une quelconque des revendications 1 à 12, dans lequel à l'étape (v), les stabilisants sont ajoutés sous forme de solution ayant un débit de 1 à 8 $\ell$/m$^3$ de solution de polymère, notamment de 3,5 à 4,5 $\ell$/m$^3$ de solution de polymère.

14. Procédé selon l'une quelconque des revendications 1 à 13, dans lequel à l'étape (v) les stabilisants sont dissous dans un solvant non polaire dans laquelle la concentration de chacun du ou des stabilisants est dans la plage de 3,5 à 15% en poids, de préférence 5 à 12% en poids.

15. Procédé selon l'une quelconque des revendications 1 à 14, dans lequel à l'étape (v), un plastifiant, de préférence une huile minérale, est ajoutée selon un débit d'injection de 0,1 à 30 $\ell$/m$^3$ de solution de polymère, notamment 0,5 à 15 $\ell$/m$^3$ de solution de polymère.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3801520 A
- JP 2002060414 A
- US 20040014915 A

- DE 102004011345
- DE 10306891 A1
- US 6593430 B